# EUROPEAN PATENT APPLICATION

(11) **EP 1 037 402 A2**
(43) Date of publication of application: **20.09.2000**
(21) Application number: 00105319.8
(22) Date of filing: 16.03.2000
(51) Int. Cl.: H04B 7/185

(54) **Power control in a time division downlink of a processing satellite**

(30) Priority: 16.03.1999 US 270361
(71) Applicant: TRW Inc., Redondo Beach, California 90278 (US)
(72) Inventor: Linsky, Stuart T., San Pedro, CA 90732 (US); Wright, David A., Solana Beach, CA 92075 (US)
(74) Representative: Schmidt, Steffen J., Dipl.-Ing.

(57) **Abstract**

The present invention provides a method for reducing power consumption in a satellite downlink transmitter (100). The method includes the steps of defining a frame structure for use on a downlink, and further defining a traffic body (218, 220, 222) and an overhead body (212, 214, 216) in the frame structure (202, 204, 206). The method further determines the amount of time required to transmit the traffic body ("the traffic transmit time") and the amount of time required to transmit the overhead body ("the overhead transmit time"). Subsequently, the method activates a transmitter for the overhead transmit time to transmit the overhead body (212, 214, 216) including the synchronization information. Thus, a ground station may acquire synchronization and lock onto the downlink. The method then, however, selectively deactivates the transmitter for the traffic transmit time. The method thereby transmits the overhead body (212, 214, 216) in every frame (202, 204, 206), but may save power by not transmitting the traffic body (218, 220, 222) of the frame.

## Description

### BACKGROUND OF THE INVENTION

The present invention relates to satellite communications systems. In particular, the present invention relates to transmission gating techniques particularly adapted to reducing the power consumption in communications satellites.

Satellites have long been used to provide communications capabilities on a global scale. Since the inception of the modern communications satellite, however, one factor has remained constant: the limited availability of power on board the satellite. The limited availability of power remains true today, even in the face of tremendous advances in satellite technology.

Major drains on satellite power include the communications reception equipment used to receive the uplink and the transmission equipment used to generate the downlink. The transmission equipment in particular often requires 50% or more of the total satellite power. Furthermore, the amplifiers used to create the downlink are much less than 100% efficient. In a typical system, for instance, a high power amplifier (HPA), in conjunction with an input microwave signal and an antenna structure, generates the Radio Frequency (RF) downlink. The key element of this HPA is a traveling wave tube (TWT) which operates by passing a current through a physical helix structure in which the microwave signal representing the downlink signal to be transmitted propagates. The helix current interacts with the wave to amplify the wave to an appropriate power level for transmission. The HPA may draw, for example, a total of 200 Watts of power, only 100 Watts of which emerge as radiated power in the RF downlink. The other 100 Watts generally turns into waste heat, which in some instances may adversely affect other components on board the satellite.

In prior satellites, the downlink runs continually. Given that the transmission equipment requires a significant portion of the satellite's power, the continuous downlink tends to be very inefficient, particularly during slack periods in transmission when little or no useful data is being transmitted to the ground. However, in some sense a continuous downlink is necessary in that synchronization information, required by the ground stations to correctly lock onto the downlink, is transmitted in the downlink.

Any undue drain on satellite power prevents a satellite from attaining and furthering many goals. Thus, for instance, limitations on satellite power prevent satellites from encoding and decoding heavier and more error protective coding schemes. Similarly, limitations on satellite power limit the total throughput of the satellite (because each piece of data processed requires a finite amount of energy). As another example, limited satellite power may reduce the number and type of observational or sensing functions which a satellite may perform. Of particular importance, undue power draw during periods when the satellite is in eclipse (i.e., passing through the earth's shadow) necessitates the provision of large batteries on the spacecraft with adverse impact on space and weight.

A need has long existed in the industry for a power saving gated power time division downlink which also provides synchronization information.

### BRIEF SUMMARY OF THE INVENTION

It is an object of the present invention to reduce the amount of power consumed by a satellite.

Another object of the present invention is to continuously provide downlink synchronization information while achieving significant reductions in downlink power by transmitting only the overhead body in a frame structure.

Another object of the present invention is to reduce the amount of waste heat generated by a satellite.

Yet another object of the present invention is to reduce the weight and size of batteries required on the satellite.

Another object of the present invention is to provide a queueing mechanism for traffic information that ensures that a maximum latency time for queued traffic information is not exceeded.

Another object of the present invention is to reduce the power consumption in a satellite that works with Asynchronous Transfer Mode (ATM) cells.

The preferred embodiment of the present invention provides a method for reducing power consumption in a satellite downlink transmitter. The method includes the steps of defining a downlink frame structure, and further defining a traffic body and an overhead body in the downlink frame structure. The overhead body may include, for example, synchronization information, convolutional decoder flush bits, time and date stamps, frame format information (i.e., choice of coding and coding rates) and the like. The traffic body typically includes information destined for end users.

The method further determines the amount of time required to transmit the traffic body ("the traffic transmit time") and the amount of time required to transmit the overhead body ("the overhead transmit time"). Synchronization information is stored in the overhead body. Subsequently, the method activates a transmitter for the overhead transmit time to transmit the overhead body including the synchronization information. Thus, a ground station may acquire synchronization and lock onto the downlink. The method then, however, selectively deactivates the transmitter for the traffic transmit time. In other words, the method transmits the overhead body in every downlink frame, but may save power by not transmitting the traffic body of the frame.

The selective deactivation of the transmitter may be responsive, for example, to the amount of traffic information waiting to be transmitted or the amount of time that traffic information has been waiting to be transmitted. As an additional example, the selective deactivation may be separately responsive to predetermined maximum power consumption guidelines and the like.

In another embodiment, the present method includes the steps of defining a frame structure for use on a downlink, and further defining a traffic body and an overhead body in the frame structure, as before. Similarly, the method determines a traffic transmit time and an overhead transmit time and synchronization information is stored in the overhead body.

The method also queues traffic information for transmission to produce queued traffic and, whenever sufficient queued traffic is present to fill the traffic body forms a traffic body and activates the full frame. The method also establishes a latency threshold which determines the maximum time for which any portion of traffic information remains queued without transmission. When insufficient traffic is present in queue to fill the traffic body, the method further determines whether the latency time has been exceeded and transmits information according to the following substeps: the transmitter is activated for the overhead transmit time to transmit the overhead body which includes the synchronization information; furthermore, if the latency time has been exceeded, the transmitter remains active to transmit the traffic body consisting of a partially full frame, while if the latency time has not been exceeded, the traffic body is left empty and the transmitter is deactivated to reduce the power consumption in the satellite.

The method may also, for example, determine when enough queued information exists to fill the traffic body and as a result fill the traffic body with this queued information. The method then activates the transmitter to transmit both the overhead body and the traffic body. Similarly, large quantities of traffic information may be broken across multiple traffic bodies (and therefore multiple frames), each having an associated overhead body. Each of the overhead bodies and associated traffic bodies is then transmitted.

### BRIEF DESCRIPTION OF THE DRAWINGS

Figure 1 illustrates one example of a downlink processing structure suitable for use in the present invention.
Figure 2 depicts several downlink frames, associated frame timing, and control signals used to activate or deactivate a transmitter, as well as the resultant power draw from the satellite bus.
Figure 3 shows several steps in processing uplink information and selectively transmitting portions of frames.

### DETAILED DESCRIPTION OF THE INVENTION

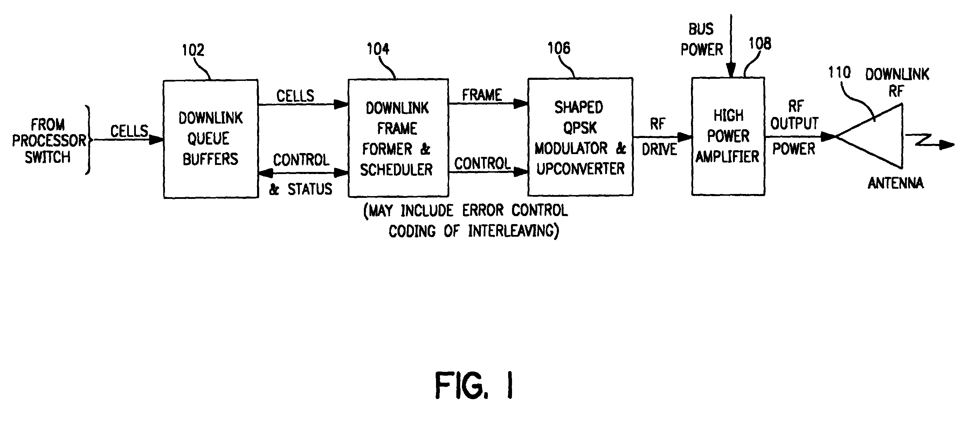

Turning now to the figures, Figure 1 illustrates one example of a downlink processing structure 100 that may be used in accordance with the present invention. The processing structure 100 includes a downlink queue buffer 102, a downlink frame formatter and scheduler 104 ("formatter 104"), and a shaped QPSK modulator & upconverter 106 ("modulator 106"). The processing structure further includes a high power amplifier (HPA) 108, and a downlink antenna 110.

The general processing flow established by the processing structure 100 proceeds from left to right. Cells, recovered from an uplink by a processor switch enter the downlink queue 102. The cells, which may, for example, be 53 byte ATM cells, are one specific example of traffic information. The traffic information entering the downlink queue 102 need not be structured in any particular format or according to any particular standard.

It is noted that the individual cells are typically transported in blocks that are FDM/TDMA multiplexed on the uplink, extensively coded, for example using a concatenated code, and modulated for transmission. As illustrated in Figure 1, the cells are provided by a processor switch and associated reception circuitry which demodulates and decodes the uplink to extract the cells. The present invention is not limited to typical uplink structures, however, as the processing structure 100 described below operates on the traffic information itself, independently of uplink structure considerations.

Preferably, however, the cells include some routing information that helps determine their destination. ATM cells are one example of such cells and include a 5 byte header (with the 48 byte body) that indicates at least a Virtual Path and Virtual Circuit designation. Routing information in the cells may then be used by the processing structure to collect and direct the cells into one of many downlink beams provided by the antenna 110 (or additional antennas). It is noted that although the discussion of the invention below proceeds with reference to ATM cells, the invention is not limited to such cells.

Continuing with reference to Figure 1, ATM cells enter the downlink queue 102 where they are stored and await transmission in a downlink. Control and status information signals pass between the downlink queue 102 and the formatter 104 and may function, for example, to query the downlink queue 102 concerning the amount of time any particular cell has been awaiting transmission. When the formatter 104 determines that downlink information is to be sent, it takes cells from the downlink queue 102 and builds a downlink frame.

A downlink frame structure generally includes two portions: a traffic body and an overhead body. The overhead body typically includes synchronization information (for example, a predetermined synchronization training sequence for the benefit of ground receivers), flush bits or tail-off for convolutional decoders, time and date information (including a frame sequence number), and frame format information (which may indicate, for example, the type of coding applied to the following traffic body) including the case where it is empty and gated off. In one particular embodiment of the present invention, the overhead body includes 16 symbols of synchronization information, 8 symbols of tail-off, 24 symbols of time and date information including a frame sequence number which sequentially numbers each frame, as well as 16 symbols of frame format information.

The traffic body in a frame structure represents the end user data and typically comprises the majority of the frame structure. As an example, the frame structure may include 7616 symbols, 64 of which are used for the overhead body (less than 1%), and 7552 of which are used for the traffic body. Although not explicitly included in the formatter 104 in Figure 1, the formatter 104 may (and typically would) include processing circuitry to apply downlink coding and interleaving to the downlink frame. Suitable coding, for example, includes concatenated codes such as convolutional inner codes (e.g., a 3/8 rate code) and Reed-Solomon (e.g., a (236,212)) outer codes with intervening interleaving.

Additional operational details of the formatter 104 are discussed below. Assuming that the formatter 104 has a downlink frame, the resultant downlink frame is passed to the modulator 106 where pulse shaping, transversal filtering, modulation, and upconversion prepares the downlink frame for transmission. As an example, the modulation may be Quadrature Phase Shift Keying (QPSK), 8-PSK, 16-PSK or the like. The upconversion typically uses a mixer to shift the frequency content in the signal representing the downlink frame to a frequency suitable for transmission. As an example, the downlink may operate in TDM fashion at an approximately 20 GHz center frequency.

The modulated downlink frame signal is provided to the HPA 108 which amplifies the downlink frame signal to an appropriate power level for transmission through the antenna 110. In one embodiment of the present invention, the HPA utilizes a travelling wave tube amplifier (TWTA). In operation, a helix current passes through the helix while the downlink frame signal (i.e., the input microwave signal) travels along the helix structure. The interaction between the helix current and the downlink frame signal results in amplification of the downlink frame signal. Preferably, the TWTA is a depressed collector TWTA that provides reduced heat generation and correspondingly reduced energy loss when the TWTA RF drive is reduced. As will be described in more detail below, the HPA 108 draws power from the satellite power bus, and the downlink frame signal may be selectively gated on or off to cause the processing structure to transmit only the overhead body, or both the overhead body and the traffic body.

First, however, several of the considerations taken into account by the formatter 104 are discussed. As noted above, cells are queued for eventual transmission in the downlink queue 102. In many instances, a regular flow of cells enters the queue 102 allowing the formatter 104 to fill the entire traffic body without substantial delay. In such instances, the formatter 104 proceeds by filling traffic bodies with cells, filling an associated overhead body with overhead information (e.g., synchronization information) and forwarding the complete downlink frame to the modulator 106 for eventual transmission. When enough cells are present in the downlink queue 102, the formatter 104 may sequentially fill multiple traffic bodies and multiple overhead bodies until the downlink queue 102 has emptied, or until too few cells exist in the downlink queue 102 to fill a complete traffic body.

There may be instances, however, when a low volume of uplink transmissions occur, and cells enter the downlink queue 102 at a much slower rate. In such instances, the formatter may build traffic bodies which are only partially full (or completely empty), fill an associated overhead body, and pass the completed downlink frame to the modulator 106 for eventual transmission. Partially full traffic bodies may be completed by inserting null information (i.e., meaningless, random, or having a predetermined pattern or symbol indicating padding information) into the remaining portion of the traffic body. In particular, null ATM cells may be inserted, with the appropriate flags set in the 5 byte header to indicate a null cell. Thus the content of a traffic body is generally all cells, a mixture of cells and null information, or all null information. Note that with a partially full traffic body, power is wasted transmitting the portion of the traffic body which contains no useful information.

In order to save substantial downlink power, the formatter 104 may refrain from transmitting a partially full (or completely empty) body. Refraining from transmitting a traffic body necessarily means that the cells, if any, present in the downlink queue 102 experience additional latency since they are held longer in queue 102. Preferably, a latency threshold is calculated that determines the maximum amount of time that a cell remains in the downlink queue 102 without transmission. As an example, the frame transmit time (generally equal to the overhead transmit time plus the traffic transmit time) is determined. The downlink threshold may then be established as a multiple (not necessarily an integer) of the frame transmit time. In a related sense, the downlink threshold may be selected as an integer number of frames (for example, no cell waits in the downlink queue 102 for longer than it takes to transmit 20 frames).

Thus, when there are not enough cells to build a complete traffic body, the formatter 104 waits until the latency threshold has been exceeded by at least one cell. At that point, the formatter 104 takes the cells present in the downlink buffer 102, rounds out a full load for the traffic body with null cells, if necessary, builds a traffic body, builds an associated overhead body, and sends the completed downlink frame (with the partially full traffic body) to the modulator 106 for eventual transmission. An important aspect of the present invention is that while the formatter 104 is unable to build a full traffic body and has no cells beyond the latency limit, it continues to build overhead bodies and "build" associated traffic bodies containing only null cells and to form downlink frames for transmission. As will be explained below, however, only the overhead information is actually transmitted (thereby providing a consistent synchronization reference for ground terminals while saving considerable amounts of power).

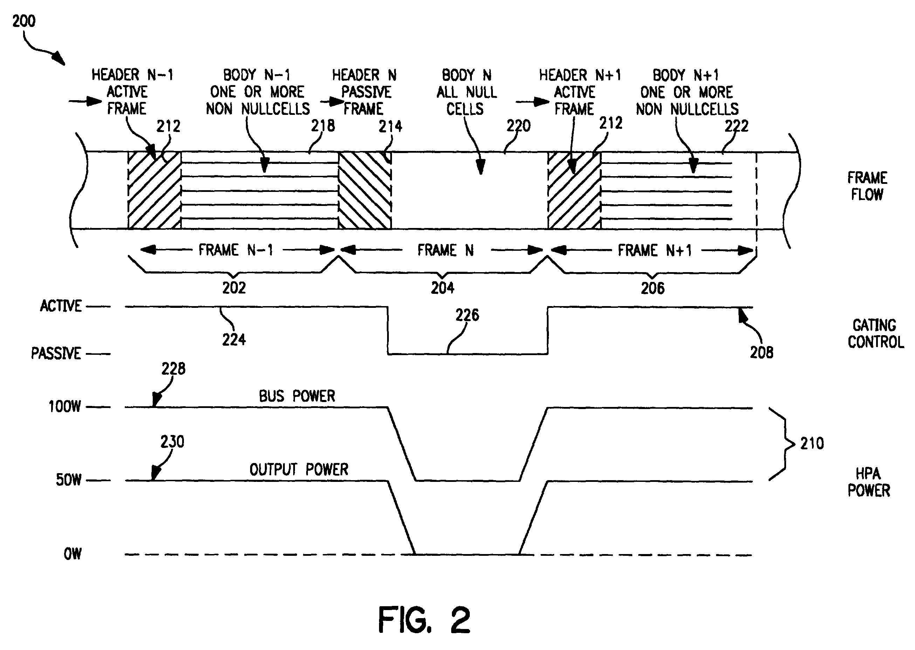

Turning now to Figure 2, that figure illustrates a transmitter signal diagram 200. The signal diagram 200 shows three sequentially transmitted frames 202, 204, and 206, a gating control signal 208, and HPA power waveforms 210. Each frame 202, 204, and 206 includes an overhead body 212, 214, and 216 respectively, and a traffic body 218, 220, and 222 respectively. The gating control signal 208 has an active level 224 and a passive level 226. The HPA power waveforms 210 include a bus power waveform 228 and an output power waveform 230.

Starting first with the frame 202, that frame includes an overhead body 212 (including synchronization information) and an associated traffic body 218. The traffic body 218 includes at least one cell of information, and may be filled in with null information (for example null ATM cells). Because the traffic body 218 includes at least one cell of non-null information, the gating control signal 224 remains in the active state during the entire frame transmit time. Thus, for example, the gating control may be used to indicate that a downlink frame signal should be fully applied as an input signal to the TWTA, or in general, that a transmitter should remain active and continue transmitting. Alternatively, the gating control may maintain the HPA 108 in an enabled state, or, in general, another amplifier associated with a transmitter.

For illustration purposes only, the bus power waveform 228 shows that the bus power drawn during active transmission is approximately 100 Watts. The output power waveform 230 indicates that approximately 50% of the bus power results in useful signal output power, approximately 50 Watts.

Next, the frame 204 is scheduled for transmission. The frame 204 includes an overhead body 214 and an associated traffic body 220. Again, the overhead body preferably includes synchronization information for the benefit of the ground station and other information essential to the processing of the frame by ground terminals including an indicator that the traffic body is empty. The traffic body 220, however, is completely devoid of information bearing cells and instead is padded with null information or null cells. As an example, the empty traffic body 220 may result because there is a complete lack of cells in the downlink queue 102, or because there are not enough cells in the downlink queue 102 to completely fill the traffic body 220 (and the latency threshold has not been exceeded for any cell in the queue 102).

Note that the gating control signal 208 remains active during the overhead transmit time for frame 204. In other words, the overhead information is transmitted (and thereby provides a regular synchronization reference to ground terminals), even when the traffic body is empty. Because the gating control signal 208 transitions to the passive level for the traffic body transmit time, the empty traffic body is not transmitted. Thus, for example, the gating control signal 208 may be used to disable or severely attenuate the input signal to a TWTA or, in general, disable the transmitter.

For illustration purposes only, the output power waveform 230 decays to approximately zero watts. Similarly, the bus power waveform 228 shows that the bus power drawn (for transmission purposes) during passive or deactivated transmission drops to approximately fifty watts. Thus, in this example, 50 watts of power are saved throughout the traffic transmit time.

Next, the frame 206 is scheduled for transmission. The frame 206 includes an overhead body 216 (including synchronization information) and an associated traffic body 222. The traffic body 222 includes at least one cell of information, and may be filled in with null information (for example null ATM cells). Because the traffic body 222 includes at least one cell of non-null information, the gating control signal 224 returns to the active state during the entire frame transmit time.

The bus power waveform 228 shows that the bus power drawn during active transmission resumes at approximately 100 Watts. Again, the output power waveform 230 indicates that approximately 50% of the bus power results in useful signal output power, approximately 50 Watts.

The signal diagram 200 thereby indicates the periods of time during which significant amounts of power are saved by selectively activating and deactivating a transmitter. Thus, for a tradeoff in (a typically short) latency, the satellite can save large amounts of power by deactivating the transmitter for the traffic transmit time of a corresponding empty traffic body.

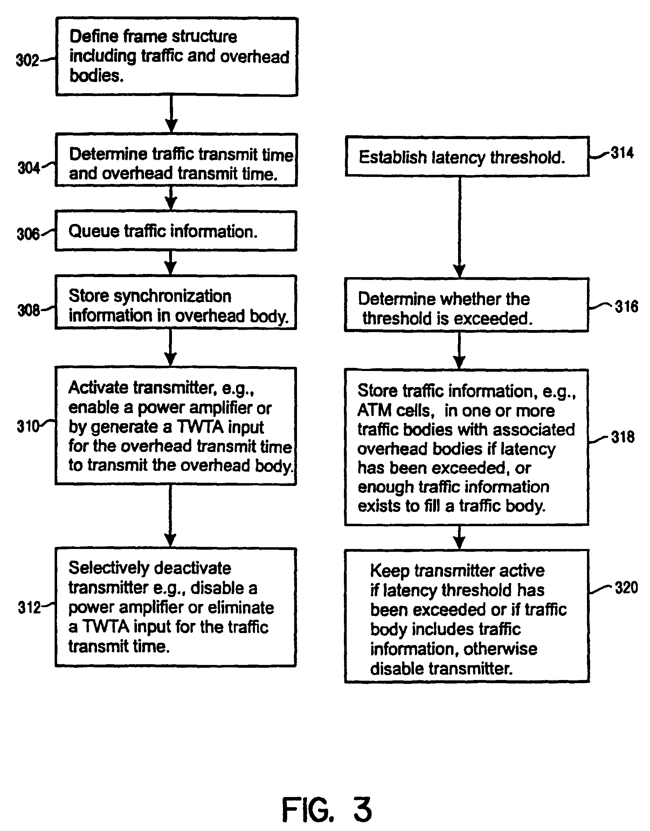

Turning now to Figure 3, that figure shows many of the steps explained above with regard to processing uplink information and selectively deactivating a transmitter. At step 302, a frame structure is defined, and includes a traffic body and an overhead body. At step 304, the amount of time required to transmit both the traffic body and the overhead body are determined. Thus, for example, the processing structure 100 may determine the length of time for which the transmitter must be activated to send the overhead body. At step 306, traffic information is queued in the downlink queue 102. During every frame, synchronization information is stored in the overhead body, as noted in step 308. Continuing, the transmitter is activated in step 310 to transmit the overhead body, and selectively deactivated in step 312 to determine whether or not the traffic body is transmitted.

Several additional steps may be also be implemented. Thus, for example, a latency may be, and typically would be, established at step 314. At step 316, the processing structure 100 determines whether the threshold is exceeded, and if so, traffic information from the downlink queue 102 is inserted into one or more traffic bodies at step 318. As noted at step 320, whether or not the transmitter remains active for the traffic body depends on whether the traffic body bears any traffic information.

While particular elements, embodiments and applications of the present invention have been shown and described, it is understood that the invention is not limited thereto since modifications may be made by those skilled in the art, particularly in light of the foregoing teaching. It is therefore contemplated by the appended claims to cover such modifications and incorporate those features which come within the spirit and scope of the invention.

## Claims

1. A method for reducing power consumption in a satellite downlink transmitter, the method comprising:
defining a frame structure for use on a downlink, and further defining a traffic body and an overhead body in said frame structure;
determining a traffic transmit time and an overhead transmit time;
storing synchronization information in said overhead body;
activating a transmitter for said overhead transmit time and transmitting said overhead body; and
selectively deactivating said transmitter for said traffic transmit time.

2. The method of claim 1, wherein said step of activating a transmitter includes the step of applying a downlink frame signal representing said overhead body to a travelling wave tube amplifier.

3. The method of claim 1, wherein said step of deactivating said transmitter includes the step of eliminating an input signal to a travelling wave tube amplifier.

4. A method for reducing power consumption in a satellite downlink transmitter, the method comprising:
defining a frame structure for use on a downlink, and further defining a traffic body and an overhead body in said frame structure;
determining a traffic transmit time, an overhead transmit time;
storing synchronization information in said overhead body;
queueing traffic information for transmission to produce queued traffic;
establishing a latency threshold which determines the maximum time for which any portion of traffic information remains queued without transmission;
determining whether said latency threshold has been exceeded; and
transmitting information in a downlink according to the following substeps:
activating a transmitter for said overhead transmit time and transmitting said overhead body including said synchronization information;
transmitting, if said latency time has been exceeded, said traffic body for said traffic time; and
deactivating, if said latency time has not been exceeded, said transmitter for said traffic ransmit time.

5. The method of claim 4, further comprising the step of sequentially storing in multiple overhead bodies synchronization information and sequentially storing in multiple associated traffic bodies said queued traffic, and wherein said transmitting step comprises activating said transmitter to transmit each of said multiple overhead bodies and each of said multiple associated traffic bodies in which queued information has been stored.

6. The method of claim 4, wherein said step of establishing a latency threshold comprises establishing said latency threshold as a multiple of a frame transmit time.

7. The method of claim 4, further comprising the steps of:
determining when enough queued information exists to fill said traffic body;
storing said queued information in said traffic body;
activating said transmitter to transmit said overhead body and said traffic body.

8. The method of claim 4, further comprising the step of storing null information in any traffic body that is only partially filled with queued traffic information.

9. A method for reducing power consumption in a satellite downlink transmitter which transmits frames in a downlink beam, said frames comprising an overhead body of predetermined length in said frame and a traffic body of predetermined length in said frame, the method comprising:
iterating the following steps:
building an overhead body;
building an associated traffic body;
transmitting said overhead body with a transmitter; and
selectively deactivating said transmitter for the duration of a traffic transmit time for said traffic body.

10. The method of claim 9, further comprising the steps of:
building an additional overhead body;
building an additional associated traffic body;
activating said transmitter;
transmitting said additional overhead body; and
selectively deactivating said transmitter for the duration of a traffic transmit time for said traffic body.

11. The method of claim 9, further comprising determining said traffic transmit time as the amount of time required by said transmitter to send said traffic body.
